# EUROPEAN PATENT SPECIFICATION

(11) **EP 3 832 802 B1**
(45) Date of publication and mention of the grant of the patent: **03.01.2024**
(21) Application number: 19871746.4
(22) Date of filing: 06.03.2019
(51) Int. Cl.: H01Q 19/02, G06K 19/07, G06K 19/077, H01Q 5/378, H01Q 13/08, H01Q 1/22, H01Q 9/04

(54) **ANTENNA DEVICE**
ANTENNENVORRICHTUNG
DISPOSITIF D'ANTENNE

(30) Priority: 10.10.2018 JP 2018191716
(43) Date of publication of application: 09.06.2021
(73) Proprietor: OMRON Corporation, Shiokoji-dori, Shimogyo-ku, Kyoto-shi Kyoto 600-8530 (JP)
(72) Inventor: NOSAKA, Tetsuya, Kyoto-shi, Kyoto 600-8530 (JP); OBATA, Junji, Kyoto-shi, Kyoto 600-8530 (JP); YASE, Satoshi, Kyoto-shi, Kyoto 600-8530 (JP); SUGANO, Masayuki, Kyoto-shi, Kyoto 600-8530 (JP); NOGAMI, Hidekatsu, Kyoto-shi, Kyoto 600-8530 (JP)
(74) Representative: Isarpatent
(86) International application number: PCT/JP2019/008879
(87) International publication number: WO 2020/075321

(56) References cited:
- EP-A2- 0 871 238
- JP-A- H0 590 828
- JP-A- 2003 318 638
- JP-A- 2008 009 537
- JP-A- 2010 063 017
- JP-A- 2012 253 699
- US-A1- 2008 309 578
- US-A1- 2008 309 578
- US-A1- 2012 169 562
- US-A1- 2015 364 826
- US-A1- 2016 172 747
- US-A1- 2017 222 303

## Description

### TECHNICAL FIELD

The present invention relates to an antenna device.

### BACKGROUND ART

For management of physical distribution or products, radio frequency identification (RFID) tags as disclosed in Patent Document 1 have been attached to to-be-managed objects, for example.

### PRIOR ART DOCUMENTS

### PATENT DOCUMENTS

Patent Document 1: Japanese Unexamined Patent Publication No. 2007-243296

US 2008/309578 A1 relates to an antenna based on proximity coupling between a short-ended microstrip feed line and a radiation patch, an RFID tag including the planar antenna, and an antenna impedance matching method thereof.

EP 0 871 238 A2 relates to antenna structures, in particular to substantially planar broadband antennas realised by microstrips.

US 2015/364826 A1 relates to an inverted-F antenna.

US 2016/172747 A1 relates to a planar inverted-F antenna.

### SUMMARY OF THE INVENTION

### PROBLEMS TO BE SOLVED BY THE INVENTION

It is conceivable that such RFID tags have been attached to various to-be-managed objects; therefore, it is thought to be desirable to reduce the size of the RFID tags. This also requires a reduction in size of an antenna for external radio communication provided in each RFID tag. However, such a reduction in size of the antenna may lead to a reduction in antenna gain or a reduction in frequency range over which communication can be made.

That is, the present inventors have found that it is difficult for the related art to suppress deterioration of antenna characteristics when the antenna is reduced in size.

An aspect of the present invention has been made in view of such circumstances, and it is therefore an object of the present invention to provide a technique for allowing a reduction in antenna size while suppressing deterioration of antenna characteristics.

### MEANS FOR SOLVING THE PROBLEM

The present invention employs the following configuration in order to solve the above-described problems.

Specifically, According to an aspect of the present invention, an antenna device according to claim 1 is provided. Optional features are set out in the dependent claims.

### EFFECT OF THE INVENTION

According to the present invention, it is possible to provide a technique for allowing a reduction in antenna size while suppressing deterioration of antenna characteristics.

### BRIEF DESCRIPTION OF THE DRAWINGS

Fig. 1 schematically illustrates an example of a perspective view of an antenna device.
Fig. 2 schematically illustrates an example of a cross-sectional view of the antenna device.
Fig. 3 shows an example of an outline of a cut-out portion of a radiation plate when viewed in a thickness direction of the radiation plate with a short wall positioned on the upside.
Fig. 4 schematically illustrates an example of a flowchart showing an outline of operation of the antenna device.
Fig. 5 shows an example of a comparison of results of measuring the intensity of radio waves radiated from an antenna element known in the related art and the intensity of radio waves radiated from the antenna device according to an embodiment.
Fig. 6 schematically illustrates an example of a cross-section of an antenna device.
Fig. 7 schematically illustrates an example of a cross-section of an antenna device.
Fig. 8 schematically illustrates an example of a cross-section of an antenna device.

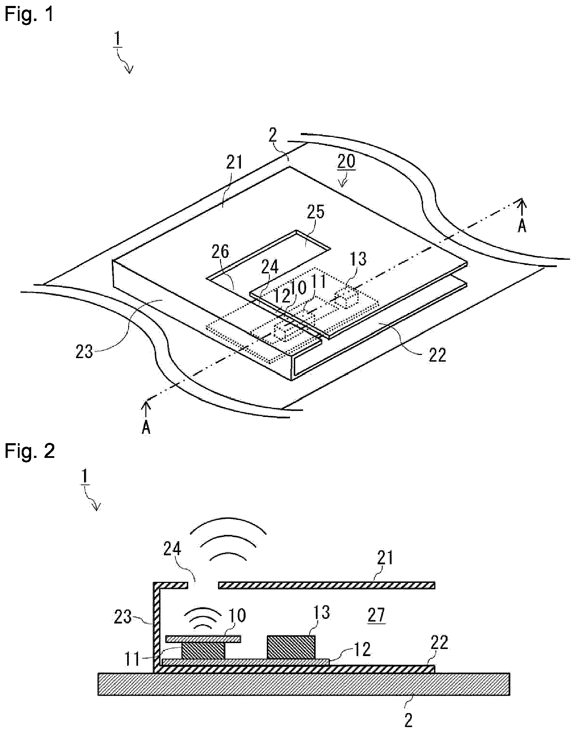

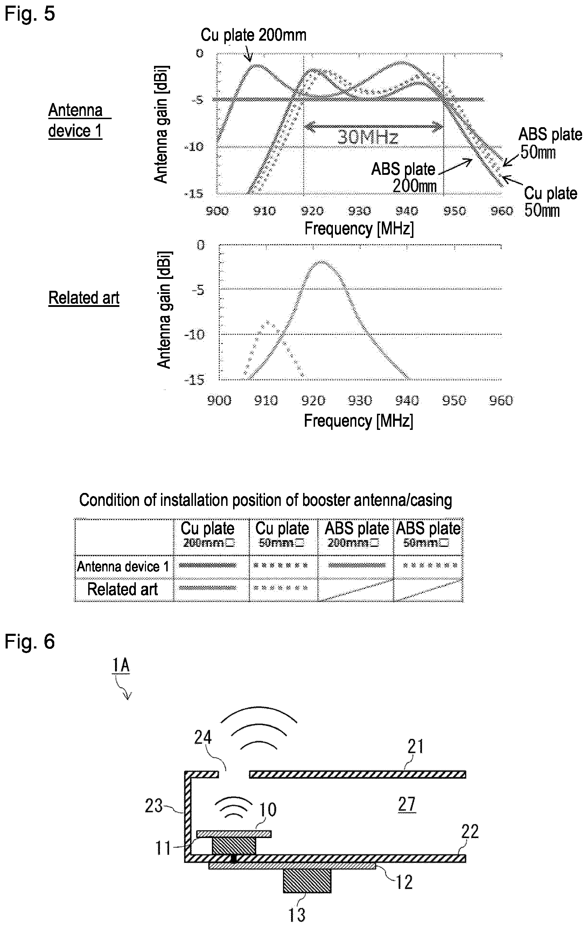

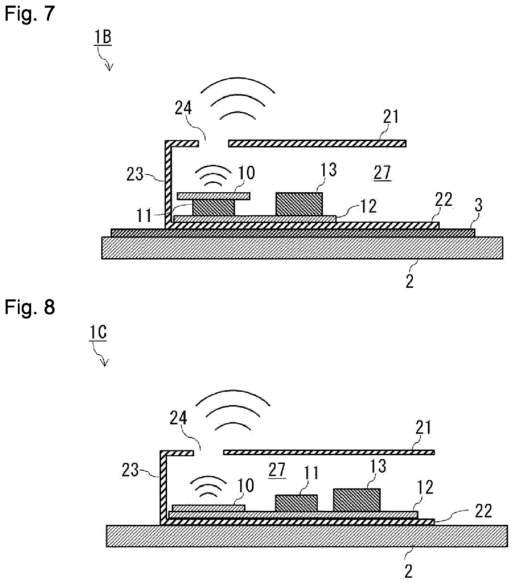

Figures 1, 2, 3 and 7 pertain to embodiments having all the features of the independent claim. Figures 6 and 8 do not have all the claimed features but are useful for understanding the invention.

### MODE FOR CARRYING OUT THE INVENTION

Hereinafter, an embodiment according to an aspect of the present invention (hereinafter, also referred to as "the embodiment") will be described with reference to the drawings. However, the embodiment described below is merely illustrative of the present invention in all respects. It is needless to say that various improvements or modifications may be made without departing from the scope of the present invention as defined by the appended claims. That is, in order to put the present invention into practice, a specific configuration according to the embodiment may be employed as needed.

### 1. Application example

A description will be given of an example of a case where the present invention is applied with reference to Figs. 1 and 2. Fig. 1 schematically illustrates an example of a perspective view of an antenna device 1. Fig. 2 schematically illustrates an example of a cross-sectional view taken along a line A-A shown in Fig. 1. The antenna device 1 includes an antenna element 10 and a booster antenna 20.

The booster antenna 20 includes a radiation plate 21 that radiates radio waves, a ground plate 22, and a short wall 23 that short-circuits the radiation plate and the ground plate 22. Further, the antenna element 10 is provided inside the booster antenna 20. Further, the radiation plate 21 includes a predetermined cut-out portion, and is provided above the antenna element 10.

That is, the antenna device 1 as described above causes radio waves radiated from the antenna element 10 and radio waves radiated from the radiation plate 21 of the booster antenna 20 to be superimposed to increase an antenna gain.

Further, the antenna device 1 as described above is designed to have the antenna element 10 placed inside the booster antenna 20. This brings the antenna device 1 down in profile. That is, the antenna device 1 as described above allows a reduction in antenna size while suppressing deterioration of the antenna characteristics.

### 2 Configuration example

Next, a description will be given of an example of the antenna device according to the embodiment. The antenna device according to the embodiment is, for example, a device capable of transmitting and receiving radio waves over the ultra high frequency (UHF) band. However, the frequency band of radio waves that can be transmitted and received by the antenna device is not limited to the UHF band.

As shown in Figs. 1 and 2, the antenna device 1 includes the antenna element 10 and the booster antenna 20. Here, the antenna element 10 is an example of a "first antenna element" according to the present invention. Further, the booster antenna 20 is an example of a "second antenna element" according to the present invention.

The booster antenna 20 includes the radiation plate 21 that radiates radio waves, the ground plate 22, and the short wall 23 that short-circuits the radiation plate 21 and the ground plate 22. The radiation plate 21 is provided facing the ground plate 22. Further, the short wall 23 is provided on sides of the radiation plate 21 and the ground plate 22, and short-circuits the radiation plate 21 and the ground plate 22. Further, the booster antenna 20 is irradiated with radio waves for power supply and communication from an external apparatus (not illustrated). Further, the radiation plate 21, the ground plate 22, and the short wall 23 may be each made of any plate-shaped conductor such as a copper plate. The booster antenna 20 is a so-called planar inverted-F antenna (PIFA). Further, a space 27 defined by the radiation plate 21, the ground plate 22, and the short wall 23 is filled with air. Here, the radiation plate 21 is an example of a "radiation plate" according to the present invention. The ground plate 22 is an example of a "ground plate" according to the present invention. The short wall 23 is an example of a "short-circuit plate" according to the present invention.

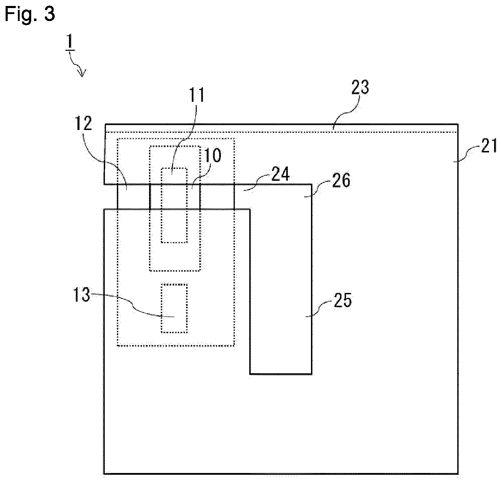

Fig. 3 shows an example of an outline of the cut-out portion of the radiation plate 21 when viewed in the thickness direction of the radiation plate 21 with the short wall 23 positioned on the upside. As shown in Fig. 3, the radiation plate 21 includes a first cut-out portion 24 and a second cut-out portion 25. The first cut-out portion 24 extends, in the radiation plate 21, from an upper left portion of the radiation plate 21 along the short wall 23. The second cut-out portion 25 extends, in the radiation plate 21, from an end portion 26 of the first cut-out portion 24 in a direction perpendicular to the cut-out direction of the first cut-out portion 24 and away from the short wall 23. That is, providing the first cut-out portion 24 and the second cut-out portion 25 in the radiation plate 21 allows the booster antenna 20 to have a longer current path.

Further, the antenna device 1 includes a circuit board 12. The circuit board 12 is placed inside the booster antenna 20 and attached to the ground plate 22 so as to bring its underside opposite from its mounting surface on which components are mounted into contact with a surface of the ground plate 22. However, the underside of the circuit board opposite from the mounting surface may be coated with an insulator. The circuit board may be made from, for example, a glass epoxy resin. Further, the circuit board 12 includes a wiring pattern that electrically connects the components mounted on the circuit board.

The antenna device 1 further includes an RFIC 11 that performs signal processing on radio frequency (RF) signals transmitted and received via the antenna element 10. The antenna element 10 is integrally provided on top of the RFIC 11. The antenna element 10 and the RFIC 11 are mounted on the circuit board 12. That is, the antenna element 10 is provided inside the booster antenna 20. Further, the radiation plate 21 is located above the antenna element 10.

Further, when viewed in the thickness direction of the radiation plate 21 with the short wall 23 positioned on the upside, the antenna element 10 is located behind a left side of the cut-out portion 24 relative to the end portion 26 of the first cut-out portion 24.

The antenna device 1 further includes a sensor element 13. The sensor element 13 is mounted on the circuit board 12.

The antenna device 1 further includes a casing 2 that accommodates the booster antenna 20. The casing 2 is made from, for example, synthetic plastic serving as an insulator. The ground plate 22 of the antenna device 1 is attached to an inner wall of the casing 2 with, for example, a bonding agent. However, the attachment of the casing 2 is not limited to the attachment with the bonding agent, and the ground plate 22 may be attached to the casing 2 with a screw or nut. Further, at least some of the antenna device 1 may be formed by a 3D printer and provided on the casing 2. Further, the ground plate 22 may be in contact with at least some of the casing 2.

### 3 Operation example

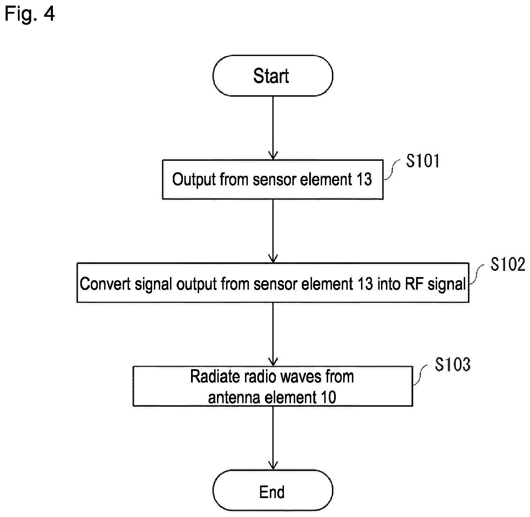

Next, a description will be given of an operation example of the antenna device 1. Fig. 4 schematically illustrates an example of a flowchart showing an outline of operation in which a signal output from the sensor element 13 is transmitted to the outside of the system via the antenna device 1.

### (Step S101)

In step S101, the sensor element 13 detects a physical quantity of a to-be-detected object. Then, a signal representing the physical quantity is output from the sensor element 13 and transmitted to the RFIC 11 through the wiring pattern provided on the circuit board 12.

### (Step S102)

In step S102, the signal received from the sensor element 13 in the RFIC 11 is modulated into an RF signal. Then, the RF signal is transmitted to the antenna element 10.

### (Step S103)

In step S103, the antenna element 10 radiates radio waves in accordance with the RF signal received from the RFIC 11. The radio waves radiated from the antenna element 10 are superimposed on radio waves radiated from the radiation plate of the booster antenna 20 and then radiated to the outside of the system.

It goes without saying that, in the above-described operation example, the output signal output from the sensor element 13 is converted into radio waves, and then the radio waves are radiated from the antenna element 10, but the signal serving as a basis of the radio waves radiated from the antenna element 10 is not limited to the output signal output from the sensor element 13.

Fig. 5 shows an example of a comparison of results of measuring the intensity of radio waves radiated from an antenna element known in the related art and the intensity of radio waves radiated from the booster antenna 20 in response to the radio waves emitted from the antenna element 10 according to the embodiment. Fig. 5 shows that the radio waves radiated from the booster antenna 20 in response to the radio waves emitted from the antenna element 10 according to the embodiment are higher in antenna gain than the radio waves radiated from the antenna element known in the related art. It is further shown that only one resonance peak appears in the radio waves radiated from the antenna element known in the related art, whereas a plurality of resonance peaks appear for the antenna device 1 according to the embodiment. Further, the plurality of resonance peaks are approximately 30 MHz apart from each other. That is, the antenna device 1 according to the embodiment allows an increase in antenna gain over a wide frequency range.

Further, as shown in Fig. 5, in the antenna device 1 according to the embodiment, it is shown that the antenna gain characteristics are more stable even when a material or size of a member on which the antenna element 10 is installed changes. This makes the antenna device 1 according to the embodiment applicable regardless of conditions such as the material and size of the member on which the antenna element 10 is installed.

### [Action and Effect]

In the antenna device 1 as described above, the radiation plate 21 of the booster antenna 20 is located in the traveling direction of the radio waves radiated from the antenna element 10. This causes the radio waves radiated from the antenna element 10 and the radio waves radiated from the booster antenna 20 to be superimposed to increase the antenna gain.

Further, in the antenna device 1 as described above, the radiation plate 21 includes the first cut-out portion 24 and the second cut-out portion 25. This allows the radiation plate 21 to have a longer current path. Therefore, as shown in Fig. 5, the radio waves radiated from the antenna device 1 produce resonance at a predetermined frequency and produce secondary resonance at a frequency different from the resonance frequency. That is, the antenna gain increases over a wide frequency range.

Further, the antenna device 1 as described above is designed to have the antenna element 10 placed inside the booster antenna 20. This brings the antenna device 1 down in profile. That is, the antenna device 1 as described above allows a reduction in antenna size while suppressing deterioration of the antenna characteristics.

Further, the antenna device 1 as described above includes the RFIC 11 that performs signal processing on the RF signal transmitted and received via the antenna element 10, the sensor element 13, and the circuit board 12 on which the RFIC 11 and the sensor element 13 are mounted. Therefore, in the antenna device 10 as described above, the RFIC 11, the sensor element 13, or the circuit board 12 may have adverse effects of deteriorating the antenna characteristics, such as a reduction in antenna gain and an impedance mismatch. However, since the antenna device 1 as described above allows an increase in antenna gain over a wide frequency range, even when the RFIC 11, the sensor element 13, or the circuit board 12 has adverse effects of deteriorating the antenna characteristics, such as a reduction in antenna gain and an impedance mismatch, the antenna device 1 relatively reduces such adverse effects. Further, the RFIC 11, the sensor element 13, or the circuit board 12 emits electromagnetic waves or heat, but an adverse effect, on the antenna characteristics, of noise generated by the electromagnetic waves or heat is also relatively reduced. That is, even when the RFIC 11, the sensor element 13, or the circuit board 12 is provided near the antenna element 10, it is possible to reduce the antenna size while suppressing deterioration of the antenna characteristics.

Further, the antenna device 1 as described above can convert, into DC power, the radio waves received via the antenna element 10 or the booster antenna 20 and supply the DC power to the RFIC 11 or the sensor element 13 mounted on the circuit board 12. In other words, the antenna device 1 as described above need not include a battery used for bringing the RFIC 11 or the sensor element 13 into operation. This allows a reduction in size of the antenna device 1.

Further, in the antenna device 1 as described above, the antenna element 10 is integrally provided on top of the RFIC 11. This allows the RFIC 11 and the antenna element 10 to be mounted on the circuit board 12 by a single action. This in turn allows a reduction in manufacturing cost of the antenna device 1 as described above.

### 4. Modification

Although the embodiment of the present invention has been described in detail, the above description is merely illustrative of the present invention in all respects. It is needless to say that various improvements or modifications may be made without departing from the scope of the present invention. For example, the following modifications may be made. In the following, the same reference numerals will be assigned to the same components as in the above-described embodiment, and no description will be given as needed of the same points as in the above-described embodiment. The following modifications may be combined as needed.

### <4.1 >

Fig. 6 schematically illustrates an example of a cross-section of an antenna device 1A. The antenna device 1A is similar in configuration requirement to the antenna device 1 and operates in a similar manner to the antenna device 1. The antenna device 1A is different from the antenna device 1 in that the circuit board 12 is provided on the outside of the booster antenna 20 in the antenna device 1A. The circuit board 12 is attached to the ground plate 22 so as to bring its underside opposite from its mounting surface on which the sensor element 13 is mounted into contact with the surface of the ground plate 22.

Further, the antenna element 10 and the RFIC 11 are attached to the surface of the ground plate 22 inside the booster antenna 20. Then, the RFIC 11 and the wiring pattern provided on the circuit board 12 are electrically connected.

### [Action and Effect]

In the antenna device 1A as described above, a distance between the antenna element 10 and the circuit board 12 is larger. This allows the antenna device 1A to reduce adverse effects, due to the circuit board 12 or the sensor 13 mounted on the circuit board 12, of deteriorating the antenna characteristics, such as a reduction in antenna gain and an impedance mismatch. This further reduces an adverse effect, on the radio waves radiated from the antenna element 10, of noise generated by heat or electromagnetic waves emitted from the circuit board 12 or the sensor element 13 mounted on the circuit board 12. That is, deterioration of the antenna characteristics of the antenna device 1 is suppressed.

### <4.2>

Fig. 7 schematically illustrates an example of a cross-section of an antenna device 1B. The antenna device 1B includes a copper plate 3 in addition to the components of the antenna device 1. Here, the copper plate 3 is an example of a "conductor" according to the present invention. The copper plate 3 is provided between the ground plate 22 and the casing 2. Further, the radiation plate 21 is made smaller in size than the ground plate 22 to reduce the size of the antenna device 1B.

### [Action and Effect]

The antenna device 1B as described above causes the radio waves radiated from the antenna element 10 to intensively transmit toward the radiation plate of the booster antenna 20. This causes the radio waves radiated from the antenna element 10 and the radio waves radiated from the booster antenna 20 to be superimposed to increase the antenna gain. Further, as shown in Fig. 5, it is shown that, when the antenna device 1 is provided in contact with a copper plate having a thickness of 200 mm, the antenna device 1 tends to cause the radio waves radiated from the antenna element to produce resonance at a predetermined frequency and produce secondary resonance at a frequency different from the resonance frequency to increase the antenna gain over a wider frequency range. Therefore, in the above-described antenna device 1B, the radiation plate 21 is made smaller in size than the ground plate 22, but deterioration of the antenna characteristics is suppressed. That is, in the above-described antenna device 1B, deterioration of the antenna characteristics is suppressed with the radiation plate 21 of the booster antenna 20 reduced in area.

### <4.3>

Fig. 8 schematically illustrates an example of a cross-section of an antenna device 1C. The antenna device 1C is similar in configuration requirement to the antenna device 1 and operates in a similar manner to the antenna device 1. The antenna device 1C is different from the antenna device 1 in that the antenna element 10 is not integrally provided with the RFIC 11 on top of the RFIC 11 in the antenna device 1C. In the antenna device 1C, the antenna element 10 is provided by being printed directly on the circuit board 12 separately from the RFIC 11.

### [Action and Effect]

The above-described configuration allows a reduction in manufacturing cost of the antenna element 10. Further, the resultant reduction in height of the antenna element 10 from the mounting surface of the circuit board 12 allows a reduction in profile of the booster antenna 20 in which the antenna element 10 is placed. This allows a reduction in size of the antenna device 1C.

### <Other modifications>

Further, the antenna device 1 according to the above-described embodiment need not include the casing 2 and may include a component that is detachably attached to a casing of an electronic apparatus. The component that is detachably attached may be, for example, a component that is fitted to and engaged with the casing of the electronic apparatus or a bonding agent. Further, in the antenna device 1, the frequency range over which the antenna gain increases may be adjusted through an adjustment to dimensions of components constituting the antenna device 1. With such an antenna device 1, for example, when a user who uses the electronic apparatus visits a plurality of foreign countries and a frequency used differs for each country, the user can select the antenna device 1 that has been adjusted in dimensions so as to increase the antenna characteristics over a frequency range used in a country the user visits and attach the antenna device 1 to the casing of the electronic apparatus. This makes the antenna device 1 highly convenient.

When the electronic apparatus to which the antenna device 1 is attached includes a conductor such as a copper plate, the antenna device 1 may be attached to the electronic apparatus with the ground plate 22 and the copper plate of the electronic apparatus electrically connected. Here, the copper plate included in the electronic apparatus is an example of a "second conductor" according to the present invention. Such a configuration causes the radio waves radiated from the antenna element 10 to intensively transmit toward the radiation plate 21 of the booster antenna 20. This causes the radio waves radiated from the antenna element 10 and the radio waves radiated from the booster antenna 20 to be superimposed to increase the antenna gain. Further, the configuration causes the radio waves radiated from the antenna element 10 to produce resonance at a predetermined frequency and produce secondary resonance at a frequency different from the resonance frequency. That is, the antenna gain increases over a wide frequency range.

Further, the ground plate 22 of the antenna device 1 may be made of copper foil. The antenna device 1 may be attached by winding the ground plate 22 around the casing of the electronic apparatus. Such an antenna device 1 is easily attached to and detached from the electronic apparatus. That is, the configuration is highly convenient. Further, when the ground plate 22 is attached by being wound around the casing of the electronic apparatus, and the components are exposed on the surface of the ground plate 22, the casing of the electronic apparatus may have a flexible surface so as to be deformed along the outer shapes of the components.

Further, in the above-described antenna device, the radiation plate 21 may be larger in size than the ground plate 22. Such an antenna device causes the radio waves radiated from the antenna element 10 and the radio waves radiated from the booster antenna 20 to be superimposed to increase the antenna gain.

Further, the periphery of the casing 2 to which the ground plate 22 of the antenna device 1 is attached may be raised. Even such an antenna device 1 allows an increase in antenna characteristics.

Further, the space 27 defined by the radiation plate 21, the ground plate 22, and the short wall 23 may be filled with a solid dielectric substance other than air. Such an antenna device can easily maintain its shape unchanged against pressure applied toward the inside of the antenna device from the outside and suppress deterioration of the antenna characteristics due to a change in shape.

Further, the shape of the cut-out portion provided in the radiation plate 21 is not limited to the above-described shape. The shape of the cut-out portion may be, for example, a T-shape, I-shape, or U-shape. Even the cut-out portion with such a shape allows the booster antenna 20 to have a longer current path. Therefore, the radio waves radiated from the above-described antenna device produce resonance at a predetermined frequency and produce secondary resonance at a frequency different from the resonance frequency. That is, the antenna gain increases over a wide frequency range.

Further, in the above-described embodiment, an example where the antenna element 10 is integrally provided on top of the RFIC 11 has been described, but the antenna element 10 may be integrally provided, for example, inside of another element mounted on the circuit board 12.

Further, the antenna element 10 may be an exciting element or a non-exciting element.

The embodiment and modifications disclosed above may be combined with each other.

Note that, in order to allow a comparison between the configuration requirement of the present invention and the configuration of the embodiment, the configuration requirement of the present invention will be described with the reference numerals used in the drawings.

### DESCRIPTION OF SYMBOLS

- 1, 1A, 1B, 1C: antenna device

- 2: casing
- 3: copper plate
- 10: antenna element
- 11: RFIC
- 12: circuit board
- 13: sensor element
- 20: booster antenna
- 21: radiation plate
- 22: ground plate
- 23: short wall
- 24: first cut-out portion
- 25: second cut-out portion
- 26: end portion
- 27: space

## Claims

1. An antenna device (1) comprising:
a first antenna element (10); and
a second antenna element (20) comprising a ground plate (22), a radiation plate (21) provided facing the ground plate (22), and a short-circuit plate (23) provided on sides of the ground plate (22) and the radiation plate (21), the radiation plate (21) being configured to radiate radio waves, the short-circuit plate (23) configured to short-circuit the radiation plate (21) and the ground plate (22),
a circuit board (12) on which an element is mounted, the element being configured to perform signal processing on a signal transmitted and received via the first antenna element (10),
wherein the first antenna element (10) is provided between the ground plate (22) and the radiation plate (21),
the radiation plate (21) is configured to receive radio waves emitted from the first antenna element (10) and to radiate the radio waves,
the circuit board (12) is provided inside the second antenna element (20), the circuit board (12) having an underside in contact with a surface of the ground plate (22), the underside being opposite from a mounting surface on which the element is mounted, and
the first antenna element (10) is provided integrally with the element.

2. The antenna device (1) according to claim 1, wherein
the radiation plate (21) comprises a cut-out portion, and
when the first antenna element (10) is viewed from a position where the radiation plate (21) is provided, the first antenna element (10) is provided behind the cut-out portion.

3. The antenna device (1) according to claim 1 or 2, further comprising a conductor (3) in contact with the ground plate (22).

4. The antenna device (1) according to claim 3, wherein
the radiation plate (21) is smaller in size than the ground plate (22).

5. The antenna device (1) according to any one of claims 1 to 4, wherein
the ground plate (22) is configured to be attached to a casing (2) of an electronic apparatus outside a system, and
the ground plate (22) is configured to be detachably attached to the electronic apparatus.

6. The antenna device (1) according to claim 5, wherein
the ground plate (22) is configured to be electrically connected to a second conductor comprised in the electronic apparatus.

7. The antenna device (1) according to claim 5 or 6, wherein
the ground plate (22) is configured to be attached to the casing (2) of the electronic apparatus by being wound around the casing (2).

## Patentansprüche

1. Antennenvorrichtung (1), umfassend:
ein erstes Antennenelement (10); und
ein zweites Antennenelement (20), das eine Erdungsplatte (22), eine Strahlungsplatte (21), die der Erdungsplatte (22) zugewandt vorgesehen ist, und eine Kurzschlussplatte (23) umfasst, die auf Seiten der Erdungsplatte (22) und der Strahlungsplatte (21) vorgesehen ist, wobei die Strahlungsplatte (21) eingerichtet ist, um Funkwellen auszustrahlen, und die Kurzschlussplatte (23) eingerichtet ist, um die Strahlungsplatte (21) und die Erdungsplatte (22) kurzzuschließen,
eine Leiterplatte (12), auf der ein Element montiert ist, wobei das Element eingerichtet ist, um eine Signalverarbeitung an einem Signal durchzuführen, das über das erste Antennenelement (10) gesendet und empfangen wird,
wobei das erste Antennenelement (10) zwischen der Erdungsplatte (22) und der Strahlungsplatte (21) vorgesehen ist,
die Strahlungsplatte (21) eingerichtet ist, um Funkwellen zu empfangen, die von dem ersten Antennenelement (10) ausgesendet werden, und um die Funkwellen auszustrahlen,
die Leiterplatte (12) im Inneren des zweiten Antennenelements (20) vorgesehen ist, wobei die Leiterplatte (12) eine Unterseite aufweist, die mit einer Fläche der Erdungsplatte (22) in Kontakt steht, wobei die Unterseite einer Montagefläche, auf der das Element montiert ist, gegenüberliegt, und
das erste Antennenelement (10) einstückig mit dem Element vorgesehen ist.

2. Antennenvorrichtung (1) nach Anspruch 1, wobei die Strahlungsplatte (21) einen ausgeschnittenen Abschnitt umfasst und,
wenn das erste Antennenelement (10) von einer Position aus betrachtet wird, an der die Strahlungsplatte (21) vorgesehen ist, das erste Antennenelement (10) hinter dem ausgeschnittenen Abschnitt vorgesehen ist.

3. Antennenvorrichtung (1) nach Anspruch 1 oder 2, ferner umfassend einen Leiter (3), der mit der Erdungsplatte (22) in Kontakt steht.

4. Antennenvorrichtung (1) nach Anspruch 3, wobei
die Strahlungsplatte (21) in ihrer Größe kleiner ist als die Erdungsplatte (22).

5. Antennenvorrichtung (1) nach einem der Ansprüche 1 bis 4, wobei
die Erdungsplatte (22) eingerichtet ist, um an einem Gehäuse (2) eines elektronischen Geräts außerhalb eines Systems angebracht zu sein, und
die Erdungsplatte (22) eingerichtet ist, um abnehmbar an dem elektronischen Gerät angebracht zu sein.

6. Antennenvorrichtung (1) nach Anspruch 5, wobei
die Erdungsplatte (22) eingerichtet ist, um mit einem zweiten Leiter, der in dem elektronischen Gerät umfasst ist, elektrisch verbunden zu sein.

7. Antennenvorrichtung (1) nach Anspruch 5 oder 6, wobei
die Erdungsplatte (22) eingerichtet ist, um an dem Gehäuse (2) des elektronischen Geräts angebracht zu sein, indem sie um das Gehäuse (2) gewickelt ist.

## Revendications

1. Dispositif d'antenne (1) comprenant :
un premier élément d'antenne (10) ; et
un second élément d'antenne (20) comprenant une plaque de masse (22), une plaque de rayonnement (21) prévue en face de la plaque de masse (22) et une plaque de court-circuit (23) prévue sur les côtés de la plaque de masse (22) et de la plaque de rayonnement (21), la plaque de rayonnement (21) étant configurée pour rayonner des ondes radio, la plaque de court-circuit (23) étant configurée pour court-circuiter la plaque de rayonnement (21) et la plaque de masse (22),
une carte de circuit imprimé (12) sur laquelle est monté un élément, l'élément étant configuré pour effectuer un traitement de signal sur un signal transmis et reçu via le premier élément d'antenne (10),
dans lequel le premier élément d'antenne (10) est prévu entre la plaque de masse (22) et la plaque de rayonnement (21),
la plaque de rayonnement (21) est configurée pour recevoir des ondes radio émises par le premier élément d'antenne (10) et pour rayonner les ondes radio,
la carte de circuit imprimé (12) est prévue à l'intérieur du second élément d'antenne (20), la carte de circuit imprimé (12) ayant une face inférieure en contact avec une surface de la plaque de masse (22), la face inférieure étant opposée à une surface de montage sur laquelle l'élément est monté, et
le premier élément d'antenne (10) est prévu d'un seul tenant avec l'élément.

2. Dispositif d'antenne (1) selon la revendication 1, dans lequel la plaque de rayonnement (21) comprend une partie découpée, et
lorsque le premier élément d'antenne (10) est vu depuis une position où la plaque de rayonnement (21) est prévue, le premier élément d'antenne (10) est prévu derrière la partie découpée.

3. Dispositif d'antenne (1) selon la revendication 1 ou 2, comprenant en outre un conducteur (3) en contact avec la plaque de masse (22).

4. Dispositif d'antenne (1) selon la revendication 3, dans lequel la plaque de rayonnement (21) est plus petite en taille que la plaque de masse (22).

5. Dispositif d'antenne (1) selon l'une quelconque des revendications 1 à 4, dans lequel
la plaque de masse (22) est configurée pour être fixée à un boîtier (2) d'un appareil électronique à l'extérieur d'un système, et
la plaque de masse (22) est configurée pour être fixée de manière amovible à l'appareil électronique.

6. Dispositif d'antenne (1) selon la revendication 5, dans lequel la plaque de masse (22) est configurée pour être connectée électriquement à un second conducteur compris dans l'appareil électronique.

7. Dispositif d'antenne (1) selon la revendication 5 ou 6, dans lequel
la plaque de masse (22) est configurée pour être fixée au boîtier (2) de l'appareil électronique en étant enroulée autour du boîtier (2).
